# EUROPEAN PATENT APPLICATION

(11) **EP 4 660 153 A1**
(43) Date of publication of application: **10.12.2025**
(21) Application number: 25171183.4
(22) Date of filing: 17.04.2025
(51) Int. Cl.: C02F 1/42, C02F 1/461, C01B 3/04, C25B 1/04, C25B 15/08

(54) **WATER ELECTROLYSIS SYSTEM AND METHOD FOR OPERATING WATER ELECTROLYSIS SYSTEM**

(30) Priority: 19.04.2024 JP 2024068450
(71) Applicant: Mitsubishi Heavy Industries, Ltd., Tokyo 100-8332 (JP)
(72) Inventor: KAMITO, Ryo, Tokyo, 100-8332 (JP); TSURUMAKI, Shigeru, Tokyo, 100-8332 (JP); TAGAMI, Naoto, Tokyo, 100-8332 (JP); TAJIMA, Hidehiko, Tokyo, 100-8332 (JP); MIYOSHI, Takahito, Tokyo, 100-8332 (JP); MUKAI, Daisuke, Tokyo, 100-8332 (JP)
(74) Representative: Studio Torta S.p.A.

(57) **Abstract**

The water electrolysis system is a water electrolysis system using an alkaline aqueous solution as an electrolytic solution, the water electrolysis system including a cell stack to which the electrolytic solution is supplied; a storage section in which the electrolytic solution is stored; an annular flow path connecting the storage section and the cell stack to each other; a pump section provided on the annular flow path; a scale removal section that is provided on the annular flow path and is capable of removing a scale included in the electrolytic solution; and a scale component removal section capable of removing scale components dissolved in the electrolytic solution at or below a saturation concentration.

## Description

### BACKGROUND OF THE INVENTION

### Field of the Invention

The present disclosure relates to a water electrolysis system and a method for operating the water electrolysis system.

Priority is claimed on Japanese Patent Application No. 2024-068450, filed April 19, 2024, the content of which is incorporated herein by reference.

### Description of Related Art

Progress is being made in putting a water electrolysis system, which electrolyzes an aqueous solution to obtain hydrogen, into practical use. This type of device mainly includes a cell stack consisting of a plurality of electrolytic cells, a tank that supplies an aqueous solution, and a power supply section for applying a voltage to the electrolytic cell. An ion exchange membrane and electrodes are arranged in the electrolytic cell, and in a case where a voltage is applied between the electrodes, electrolysis of the aqueous solution is performed, whereby hydrogen can be finally obtained.

Incidentally, in the water electrolysis system, an aqueous potassium hydroxide solution may be used for the purpose of increasing the solubility in water. In this case, a trace amount of scale components (components dissolved in the electrolytic solution at or below a saturation concentration) is included as impurities generated during the production of the aqueous potassium hydroxide solution, and may be precipitated in the aqueous solution as a scale. On the other hand, Japanese Unexamined Patent Application, First Publication No. 2010-155227 (Patent Document 1) described below discloses technology for removing ions included in cathode water by an ion exchange membrane in an ozone water generating device.

### Citation List

### Patent Document

Patent Document 1: Japanese Unexamined Patent Application, First Publication No. 2010-155227

### SUMMARY OF THE INVENTION

It has now been confirmed that in a water electrolysis system, the membrane resistance increases and an electrolysis voltage increases due to a scale deposited inside a cell or scale components accumulated in an ion exchange membrane. However, in the field of this system, there is currently no effective measure proposed for removing the scale or the scale components.

The present disclosure has been made in order to solve the problem, and an object of the present disclosure is to provide a water electrolysis system capable of further lowering an electrolysis voltage, and a method for operating the water electrolysis system.

In order to solve the problem, the water electrolysis system according to the present disclosure is a water electrolysis system using an alkaline aqueous solution as an electrolytic solution, the water electrolysis system including: a cell stack to which the electrolytic solution is supplied; a storage section in which the electrolytic solution is stored; an annular flow path connecting the storage section and the cell stack to each other; a pump section provided on the annular flow path; a scale removal section that is provided on the annular flow path and is capable of removing a scale included in the electrolytic solution; and a scale component removal section capable of removing scale components dissolved in the electrolytic solution at or below a saturation concentration.

A method for operating the water electrolysis system according to the present disclosure is a method for operating the water electrolysis system, the method including: a step of circulating the electrolytic solution in the annular flow path; and a step of applying a voltage to the cell stack after the circulating step.

According to the present disclosure, a water electrolysis system capable of further lowering an electrolysis voltage, and a method for operating the water electrolysis system can be provided.

### BRIEF DESCRIPTION OF THE DRAWING

FIG. 1 is a schematic view showing the configuration of a water electrolysis system according to an embodiment of the present disclosure.
FIG. 2 is a flowchart showing a method for operating the water electrolysis system according to an embodiment of the present disclosure.
FIG. 3 is a graph showing a relationship between an elapsed time and an electrolysis voltage in the water electrolysis system of the present disclosure.

### DETAILED DESCRIPTION OF THE INVENTION

### Configuration of Water Electrolysis System 1

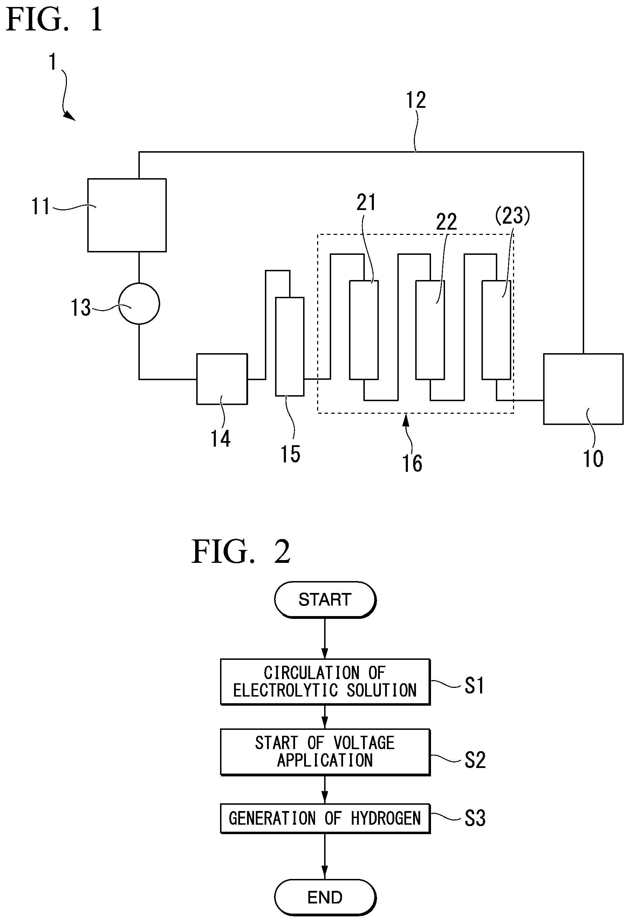

Hereinafter, a water electrolysis system 1 and a method for operating the same according to the embodiments of the present disclosure will be described with reference to FIGS. 1 to 3.

As shown in FIG. 1, the water electrolysis system 1 includes a cell stack 10, a storage section 11, an annular flow path 12, a pump 13, a filter section 14, a scale removal section 15, and a scale component removal section 16.

The cell stack 10 has a plurality of electrolytic cells. The electrolytic cell mainly has an ion exchange membrane, a cathode, and an anode. The ion exchange membrane is interposed between the anode and the cathode. The ion exchange membrane is, for example, a solid polymer electrolyte membrane. The ion exchange membrane is, for example, an anion exchange membrane (AEM) having hydroxide ion conductivity. It should be noted that the ion exchange membrane is not limited to the examples, and may be a proton-electrical conductive proton exchange membrane (PEM) in a type different from the examples.

In addition, the surroundings of the electrolytic cell are filled with an electrolytic solution. An alkaline aqueous solution is used as the electrolytic solution. Specifically, an aqueous potassium hydroxide solution is suitably used. In a case where a voltage is applied between the anode and the cathode, water and oxygen are generated at the anode, and hydroxide ions and hydrogen are generated at the cathode. Specifically, the following chemical reaction occurs on the cathode side.

2H₂O + 2e⁻ → H₂ + 2OH⁻

The following chemical reaction occurs on the anode side.

2OH⁻ → 1/2O₂ + H₂O + 2e⁻

As a result, a chemical reaction shown below occurs in the entire electrolytic cell.

H₂O → H₂ + 1/2O₂

The hydroxide ions are supplied to the anode side through the ion exchange membrane. At the anode, electrons are extracted from the hydroxide ions, and thus, water and oxygen are generated as described above. Such a cycle is continuously generated, whereby a hydrogen gas as a final product is obtained.

The storage section 11 is a container that stores the electrolytic solution. An annular flow path 12 is provided between the storage section 11 and the cell stack 10. The annular flow path 12 connects the storage section 11 and the cell stack 10 in an annular shape. The pump 13, the filter section 14, the scale removal section 15, and the scale component removal section 16 are arranged in this order on the annular flow path 12. The pump 13 is provided in order to pump the electrolytic solution.

The filter section 14 removes coarse particle suspended matters included in the electrolytic solution. Specifically, a porous material or a mesh-shaped member is used as the filter section 14. In addition, it is desirable that the filter section 14 has alkali resistance. Examples of the filter section 14 include MCS-020-D10ER manufactured by ADVANTEC, which is formed of polyether sulfone.

The scale removal section 15 removes a scale in the electrolytic solution. The scale refers to a substance in a state where scale components described later are precipitated in the electrolytic solution.

The scale component removal section 16 selectively removes specific metal ions (scale components) included in the electrolytic solution. Here, the specific metal ions refer to calcium ions, magnesium ions, iron ions, nickel ions, chromium ions, manganese ions, or molybdenum ions. These metal ions are impurities included in a trace amount in potassium hydroxide serving as a reagent in a case where an aqueous potassium hydroxide solution is generated as an electrolytic solution, and the impurities cause an increase in membrane resistance by being attached to the cell stack 10 as a scale in a case of being precipitated, and finally cause an increase in the electrolysis voltage of the cell stack 10, which has been identified by the present inventors.

The scale component removal section 16 includes at least one of a first removal section 21, a second removal section 22, and a third removal section 23. The first removal section 21 is filled with a chelating resin. The second removal section 22 is filled with a cation exchange resin. The third removal section 23 is filled with an anion exchange resin. More specifically, the scale component removal section 16 includes a resin material having at least one functional group of iminodiacetic acid, aminophosphoric acid, and Type I quaternary ammonium. An example in which the first removal section 21 and the second removal section 22 are used is shown in FIG. 1. The first removal section 21 and the second removal section 22 are arranged in series on the annular flow path 12. In a case where the third removal section 23 is arranged, it is desirable that the third removal section 23 is further arranged in series with the first removal section 21 and the second removal section 22. In addition, unlike this configuration, a mixed-bed method in which the second removal section 22 and the third removal section 23 are housed in the same housing as the first removal section 21 can also be adopted.

### Method for Operating Water Electrolysis System 1

Next, a method for operating the water electrolysis system 1 will be described with reference to FIG. 2. As shown in the drawing, in this operating method, first, the electrolytic solution is circulated in the annular flow path 12 in Step S1. In the middle of this circulation, the electrolytic solution passes through the filter section 14, the scale removal section 15, and the scale component removal section 16. By repeating the circulation a plurality of times, the suspended matter, the scale, and the scale components are removed from the electrolytic solution, leading to a clean state. In this state, the voltage is started to be applied to the cell stack 10 by Step S2. Thereafter, the above-described electrolysis reaction occurs and the generation of hydrogen starts (Step S3). Steps S1 to S3 are used not only during the first-round operation of the system but also for an operation for the start of the operation in a normal state. In addition, the generation of hydrogen can be continued in a state where the electrolytic solution is normally circulated, as necessary.

### Operational Effects

In the water electrolysis system 1, an aqueous potassium hydroxide solution may be used for the purpose of increasing the ion conductivity of water. In this case, as impurities generated during the production of the aqueous potassium hydroxide solution, trace amounts of various scale components may be dissolved in the aqueous solution. In addition, trace amounts of various metal ions may be eluted into the potassium hydroxide solution (electrolytic solution) from a metal surface of a cell stack member or a system pipe portion in contact with the potassium hydroxide solution. The present inventors have now confirmed a problem that trace amounts of these metal ions cause the scale or the scale components to be liberated in the electrolytic solution, increasing the membrane resistance and resulting in an increase in the electrolysis voltage. However, in the field of this system, there is currently no effective measure proposed for removing the scale or the scale components. In order to solve the problem, the present embodiment adopts each of the above-described configurations.

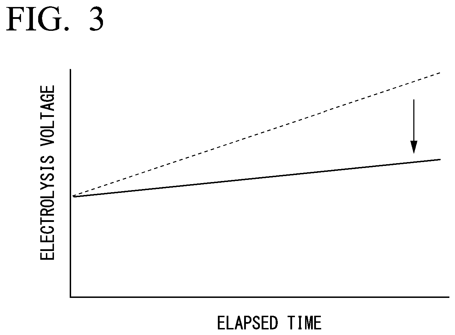

According to the configuration, the electrolytic solution passes through the scale removal section 15 and the scale component removal section 16 in the middle of the circulation of the electrolytic solution in the annular flow path 12. In this case, the specific scale or scale components included in the electrolytic solution can be selectively removed. Specifically, it is possible to remove calcium ions, magnesium ions, iron ions, nickel ions, chromium ions, manganese ions, or molybdenum ions. The present inventors have identified these scale components as substances that cause an increase in the electrolysis voltage of water. Therefore, by removing these components, the electrolysis voltage can be significantly lowered (see FIG. 3). Furthermore, the chain line in FIG. 3 is Reference Example showing a change in the electrolysis voltage in a case where the filter section 14, the scale removal section 15, and the scale component removal section 16 are not provided, and the solid line indicates a change in the electric field voltage under the configuration according to the present embodiment. Therefore, it is possible to significantly lower the cost required for the operation of the water electrolysis system 1. As a result, the production cost of hydrogen, which is a final product, can be lowered, contributing to a further spread of hydrogen energy.

According to the configuration, the electrolytic solution passes through the first removal section 21, the second removal section 22, and the third removal section 23, whereby selective ion removal by each resin material, that is, removal of the scale and scale components can be realized. For example, a mesh filter can remove metal scales such as magnesium oxide (MnO₂), calcium oxide (CaO), and calcium carbonate (CaCO₃), and a chelating resin can remove or recover metal ions such as a calcium ion (Ca²⁺), a magnesium ion (Mg²⁺), a barium ion (Ba²⁺), a manganese ion (Mn²⁺), a nickel ion (Ni²⁺), an iron ion (Fe²⁺, Fe³⁺), and a chromium ion (Cr²⁺, Cr³⁺) with high selectivity for specific metal ions and by forming a chelate (complex). In addition, the cation exchange resin is in the form of hydrogen ions (H form) which have been dissociated into a fixed ion -SO₃⁻ and a counterion H⁺ in a solution. It exchanges with cations such as a potassium ion (K⁺) and a sodium ion (Na⁺), and releases the originally included hydrogen ion H⁺ into the electrolytic solution. The anion exchange resin dissociates into a fixed ion and a counterion in a solution to form a hydroxide ion form (OH form). Then, the hydroxide ion is exchanged with an anion such as a chloride ion (Cl⁻), a sulfate ion (SO₄²⁻), and a nitrate ion (NO₃⁻) in water, and the hydroxide ion OH⁻ originally included in the electrolytic solution is released.

Here, a biofilm or other suspended matters may adhere to the ion exchange membrane included in the cell stack 10. By configuring such suspended matters to be liberated in the electrolytic solution, a deterioration in the performance of the ion exchange membrane itself can be caused. According to the configuration, the scale in the electrolytic solution can be efficiently removed by the scale removal section 15 by removing the coarse particle suspended matters in advance by the filter section 14. As a result, the life of the cell stack 10 is extended, and thus, the operation cost of the system and the production cost of hydrogen as a final product can be lowered.

According to the configuration, the resin materials having at least one of iminodiacetic acid, aminophosphoric acid, and Type I quaternary ammonium as a functional group each selectively bond to metal ions that exhibit reactivity, whereby these metal ions can be efficiently removed.

According to the method, the electrolytic solution can be supplied to the cell stack 10 in a clean state by circulating the electrolytic solution in the annular flow path 12 at a stage before a voltage is applied to the cell stack 10. As a result, the possibility that the electrolysis voltage of the cell stack 10 increases can be significantly reduced.

### Other Embodiments

The embodiments of the present disclosure have been described above in detail with reference to the drawings. However, specific configurations are not limited to the embodiments, and further include design modifications or the like within a scope which does not depart from the gist of the present disclosure.

For example, in the above-described water electrolysis system 1, a configuration in which the filter section 14 is not provided can also be adopted. Even in this case, the operational effects of removing the metal ions or the scale and reducing the electrolysis voltage can be obtained.

### Additional Remark

The water electrolysis system 1 and the method for operating the water electrolysis system 1 described in each embodiment are understood as follows, for example.
(1) A water electrolysis system 1 according to a first aspect is a water electrolysis system 1 using an alkaline aqueous solution as an electrolytic solution, the water electrolysis system including: a cell stack 10 to which the electrolytic solution is supplied; a storage section 11 in which the electrolytic solution is stored; an annular flow path 12 connecting the storage section 11 and the cell stack 10 to each other; a pump 13 provided on the annular flow path 12; a scale removal section 15 that is provided on the annular flow path 12 and is capable of removing a scale included in the electrolytic solution; and a scale component removal section 16 capable of removing scale components dissolved in the electrolytic solution at or below a saturation concentration.

According to the configuration, the electrolytic solution passes through the scale removal section 15 and the scale component removal section 16 in the middle of the circulation of the electrolytic solution in the annular flow path 12. In this case, the scale and the scale components included in the electrolytic solution can be selectively removed.

(2) A water electrolysis system 1 according to a second aspect is the water electrolysis system 1 according to (1), in which the scale component removal section 16 has at least one of a first removal section 21 filled with a chelating resin, a second removal section 22 filled with a cation exchange resin, and a third removal section 23 filled with an anion exchange resin.

According to the configuration, the electrolytic solution passes through the first removal section 21, the second removal section 22, and the third removal section 23, whereby selective ion removal by each resin material, that is, removal of the scale component can be realized.

(3) A water electrolysis system 1 according to a third aspect is the water electrolysis system 1 according to (1) or (2), further including a filter section 14 that is provided on an upstream side of the scale removal section 15 and is capable of removing suspended matters in the electrolytic solution.

According to the configuration, it is possible to efficiently remove the suspended matters by the filter section 14.

(4) A water electrolysis system 1 according to a fourth aspect is the water electrolysis system 1 according to any one of (1) to (3), in which the scale component removal section 16 includes a resin material having at least one of iminodiacetic acid, aminophosphoric acid, and Type I quaternary ammonium as a functional group.

According to the configuration, the functional groups each selectively bonds to metal ions exhibiting reactivity, and these metal ions can be efficiently removed.

(5) A water electrolysis system 1 according to a fifth aspect is the water electrolysis system 1 according to (1) or (2), in which the scale removal section 15 includes a mesh filter capable of removing a scale precipitated in the electrolytic solution.

According to the configuration, the scale precipitated in the electrolytic solution can be removed.

(6) A water electrolysis system 1 according to a sixth aspect is the water electrolysis system 1 according to (1) or (2), in which the water electrolysis system has an anion exchange membrane type electrolytic cell.

According to the configuration, water electrolysis can be efficiently carried out.

(7) A method for operating a water electrolysis system according to a seventh aspect is a method for operating the water electrolysis system 1 according to any one of (1) to (4), the method including a step of circulating the electrolytic solution in the annular flow path 12; and a step of applying a voltage to the cell stack 10 after the circulating step.

According to the method, the electrolytic solution can be supplied to the cell stack 10 in a clean state by circulating the electrolytic solution in the annular flow path 12 at a stage before a voltage is applied to the cell stack 10. As a result, the possibility that the electrolysis voltage of the cell stack 10 increases can be significantly reduced.

According to the present disclosure, a water electrolysis system capable of further lowering an electrolysis voltage, and a method for operating the water electrolysis system can be provided.

While preferred embodiments of the invention have been described and illustrated above, it should be understood that these are exemplary examples of the invention and are not to be considered as limiting. Additions, omissions, substitutions, and other modifications can be made without departing from the scope of the invention. Accordingly, the invention is not to be considered as being limited by the foregoing description and is only limited by the scope of the appended Claims.

### EXPLANATION OF REFERENCES

1: water electrolysis system
10: cell stack
11: storage section
12: annular flow path
13: pump
14: filter section
15: scale removal section
16: scale component removal section
21: first removal section
22: second removal section
23: third removal section

## Claims

1. A water electrolysis system using an alkaline aqueous solution as an electrolytic solution, the water electrolysis system comprising:
a cell stack to which the electrolytic solution is supplied;
a storage section in which the electrolytic solution is stored;
an annular flow path connecting the storage section and the cell stack to each other;
a pump section provided on the annular flow path;
a scale removal section that is provided on the annular flow path and is capable of removing a scale included in the electrolytic solution; and
a scale component removal section capable of removing scale components dissolved in the electrolytic solution at or below a saturation concentration.

2. The water electrolysis system according to Claim 1,
wherein the scale component removal section has at least one of a first removal section filled with a chelating resin, a second removal section filled with a cation exchange resin, and a third removal section filled with an anion exchange resin.

3. The water electrolysis system according to Claim 1, further comprising:
a filter section that is provided on an upstream side of the scale removal section and is capable of removing suspended matters in the electrolytic solution.

4. The water electrolysis system according to any one of Claims 1 to 3,
wherein the scale component removal section includes a resin material having at least one of iminodiacetic acid, aminophosphoric acid, and Type I quaternary ammonium as a functional group.

5. The water electrolysis system according to Claim 1 or 2,
wherein the scale removal section includes a mesh filter capable of removing a scale precipitated in the electrolytic solution.

6. The water electrolysis system according to Claim 1 or 2,
wherein the water electrolysis system has an anion exchange membrane type electrolytic cell.

7. A method for operating the water electrolysis system according to any one of Claims 1 to 3, the method comprising:
a step of circulating the electrolytic solution in the annular flow path; and
a step of applying a voltage to the cell stack after the circulating step.
